# FASCICULE DE BREVET EUROPEEN

(11) **EP 3 568 583 B1**
(45) Date de publication et mention de la délivrance du brevet: **18.08.2021**
(21) Numéro de dépôt: 18702760.2
(22) Date de dépôt: 11.01.2018
(51) Int. Cl.: F02K 1/38, F02K 1/48

(54) **MÉLANGEUR DE FLUX À ÉPAISSEUR ÉVOLUTIVE**
STRÖMUNGSMISCHER MIT WECHSELNDER DICKE
FLOW MIXER WITH A CHANGING THICKNESS

(30) Priorité: 11.01.2017 FR 1750234
(43) Date de publication de la demande: 20.11.2019
(73) Titulaire: Safran Aircraft Engines, 75015 Paris (FR)
(72) Inventeur: PARGNY, Rémy Olivier, 77550 Moissy-Crayamel (FR); MADEC, Alain Paul, 77550 Moissy-Crayamel (FR)
(74) Mandataire: Regimbeau
(86) Numéro de dépôt international: PCT/FR2018/050064
(87) Numéro de publication internationale: WO 2018/130787

(56) Documents cités:
- EP-A1- 1 496 238
- FR-A1- 3 008 740
- US-A- 5 265 807
- US-A1- 2010 257 865

## Description

### DOMAINE TECHNIQUE GÉNÉRAL ET ART ANTÉRIEUR

L'invention concerne un mélangeur de flux pour les turboréacteurs à flux multiples.

Dans les turboréacteurs à flux multiples, notamment à double flux, le mélange des flux primaire et secondaire est réalisé dans la partie aval du turboréacteur. On rappelle que le flux primaire est le flux d'air chaud passant par la chambre de combustion. Le flux secondaire est quant à lui un flux d'air froid propulsé par la soufflante. Il s'écoule concentriquement autour du flux d'air chaud, entre le carter contenant les étages de compression, la chambre de combustion et les turbines et un capotage du turboréacteur.

Le mélange des deux flux présente des avantages multiples : réduction du bruit d'éjection des gaz, augmentation de la poussée et du rendement global du turboréacteur.

Un exemple de mélangeur est décrit dans le brevet FR2.875.854. Un autre exemple est décrit dans le document US 2010/257865.

Classiquement, un tel mélangeur présente sur son pourtour une série d'ondulations. Ces ondulations forment ensemble une pluralité de lobes externes et internes répartis de façon circonférentielle autour de l'axe longitudinal du mélangeur.

Selon le type de turboréacteur sur lequel les mélangeurs sont montés, il est habituel de jouer sur différents paramètres de la géométrie de ceux-ci (longueur et diamètre du mélangeur, rayon de courbure des lobes, etc.) afin d'en optimiser les performances aérodynamiques et le mélange des flux.

Ces modifications ont des conséquences sur le comportement dynamique des mélangeurs.

Par exemple, l'allongement de la longueur du mélangeur et l'accroissement du rayon de courbure de ses lobes peut conduire à une baisse de rigidité de la pièce, abaissant les fréquences de ses modes propres de vibration.

Lorsque ces modes de vibration coïncident avec certains régimes de fonctionnement stabilisés du turboréacteur, les déformations engendrées par la réponse vibratoire du mélangeur peuvent se révéler dangereuses pour sa structure et sa tenue mécanique.

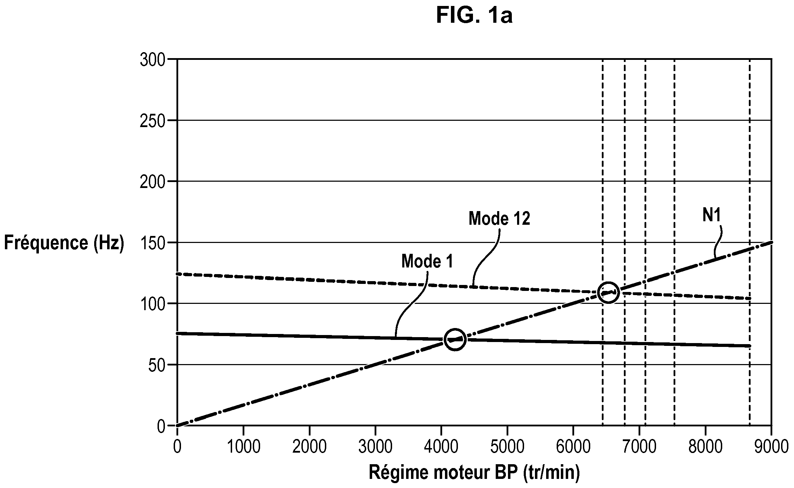

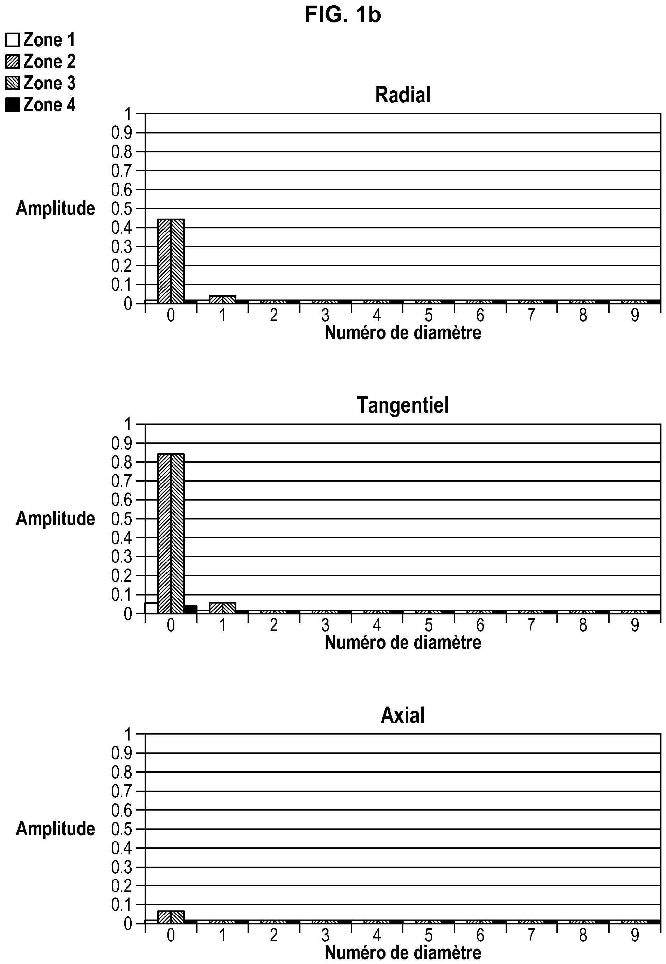

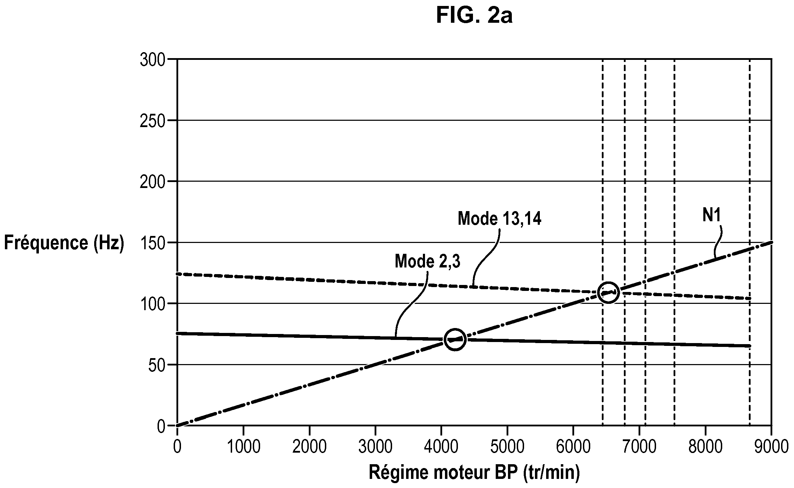

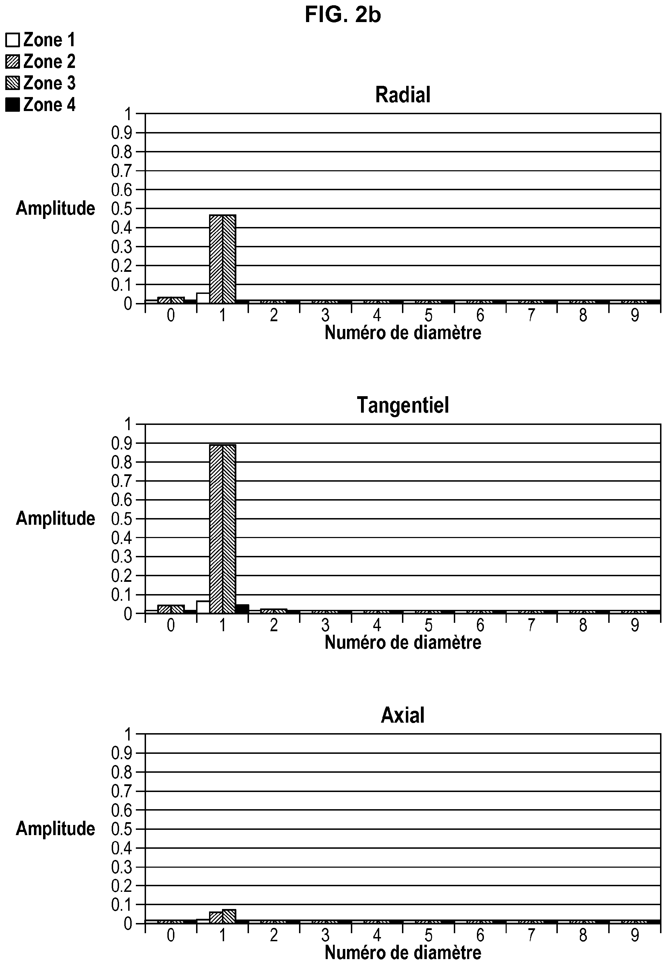

C'est ce qu'illustrent les figures 1a, 1b et 2a, 2b.

En référence à la figure 1a, l'étude du diagramme de Campbell, présentant l'évolution des fréquences de vibrations engendrées dans le mélangeur 1 en fonction du régime de fonctionnement du turboréacteur, a mis en évidence la coïncidence de deux modes propres à diamètre pur avec les fréquences de vibrations engendrées par certains régimes de fonctionnement du turbopropulseur.

Les deux droites décroissantes correspondent aux fréquences propres de deux modes de vibration à diamètre pur de type 0Φ.

Ce type de mode vibratoire cause une déformation radiale et tangentielle de la pièce, localisée sur certaines zones du mélangeur.

La répartition des déformations symbolisée en figure 1b montre que la grande majorité des déformations sont localisées sur la colonne 0, cette répartition caractérisant un mode pur de type 0Φ.

Ce type de déformation provoque successivement des expansions et des contractions de forme circulaire de la pièce.

La fréquence des vibrations du mélangeur engendrées par le fonctionnement du turboréacteur, coïncide avec les deux modes propres à diamètre pur, notamment avec le mode 12 à une fréquence correspondant à un des modes de fonctionnement stabilisé du turboréacteur, symbolisés par les droites verticales.

En référence à la figure 2a, l'étude du diagramme de Campbell du mélangeur 1 met en évidence la coïncidence de la fréquence des vibrations engendrées dans le mélangeur 1 par le fonctionnement du turboréacteur avec deux modes à diamètre pur de type 1Φ.

Ce type de réponse vibratoire cause une déformation radiale et tangentielle de la pièce, dont la répartition est représentée sur la figure 2b, provoquant successivement des expansions et des contractions de forme elliptique. La totalité des déformations sont localisées sur la colonne 1, cette répartition caractérisant un mode pur de type 1Φ.

Un de ces modes à diamètre pur est atteint pour une fréquence correspondant à un régime de fonctionnement stabilisé de l'aéronef.

### PRÉSENTATION GÉNÉRALE DE L'INVENTION

Un but général de l'invention est de minimiser la réponse vibratoire du mélangeur.

Un autre but est de limiter le gain de masse du mélangeur inhérent aux modifications de sa structure.

Selon un aspect, l'invention propose un mélangeur de flux gazeux concentriques dans une turbomachine à flux multiples, comportant une partie amont nominalement cylindrique et une partie aval présentant des lobes extérieurs et intérieurs répartis de façon circonférentielle sur le tour dudit mélangeur, caractérisé en ce qu'il comporte au moins un lobe modifié disposé selon un motif angulaire apériodique et présentant en au moins une zone une épaisseur de paroi différente des autres lobes, de manière à modifier la réponse vibratoire dudit mélangeur.

Un tel mélangeur est avantageusement complété par les différentes caractéristiques suivantes prises seules ou en combinaison :
- les lobes modifiés présentent une épaisseur de paroi qui varie entre 110% et 300% de l'épaisseur de paroi des lobes réguliers ;
- les lobes modifiés présentent une épaisseur de 1,5mm ;
- les lobes modifiés présentent une épaisseur de paroi qui varie entre 50% et 90% de l'épaisseur de paroi des lobes réguliers ; bien entendu, si le mélangeur comporte également au moins un lobe modifié présentant une épaisseur de paroi qui varie entre 110% et 300% de l'épaisseur de paroi des lobes réguliers, ce lobe est différent de celui ou ceux présentant une épaisseur de paroi entre 50% et 90% de l'épaisseur de paroi des lobes réguliers ;
- le mélangeur comporte au moins deux lobes modifiés ;
- un ajout ou un retrait de matière s'étend sur l'ensemble d'une zone comportant un demi lobe intérieur, un lobe extérieur et un demi lobe intérieur ;
- les lobes modifiés présentent une configuration d'épaisseurs de paroi conçue pour générer des modes de vibration complexes ;
- deux lobes disposés selon un motif angulaire apériodique présentent une épaisseur de paroi différente.

Selon un autre aspect, l'invention concerne une turbomachine comportant un tel mélangeur.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure la est une représentation graphique d'un diagramme de Campbell mettant en lumière la coïncidence d'un mode propre à diamètre pur de type 0Φ du mélangeur avec les vibrations causées par le turboréacteur lors de régimes de fonctionnement stabilisé, la figure 1b étant une représentation en histogramme de la répartition des déformations rencontrées dans un des modes propres mis en évidence dans le diagramme de Campbell en figure la ;
- la figure 2a est une représentation graphique d'un diagramme de Campbell mettant en lumière la coïncidence d'un mode propre à diamètre pur de type 1Φ du mélangeur avec les vibrations causées par le turboréacteur lors de régimes de fonctionnement stabilisé, la figure 2b étant une représentation en histogramme de la répartition des déformations rencontrées dans un des modes propres mis en évidence dans le diagramme de Campbell en figure 2a ;

- la figure 3 représente une vue en coupe schématisée d'un turboréacteur vu de profil et les éléments le constituant ;
- les figures 4a, 4b et 4c sont des modélisations 3D du mélangeur de flux sous différents angles de vue ;
- les figures 5a et 5b représentent la localisation et le type des déformations sur une modélisation du mélangeur pour un mode à diamètre pur dit 0Φ ;
- les figures 6a et 6b représentent l'amplitude et la localisation des déformations d'un mode de vibration complexe sur un mélangeur ;
- les figures 7a et 7b représentent une modélisation en 3D du mélangeur mettant en lumière les modifications reçues dans le but de modifier sa réponse vibratoire.

### DESCRIPTION D'UN OU PLUSIEURS MODES DE MISE EN ŒUVRE ET DE RÉALISATION

### Généralités

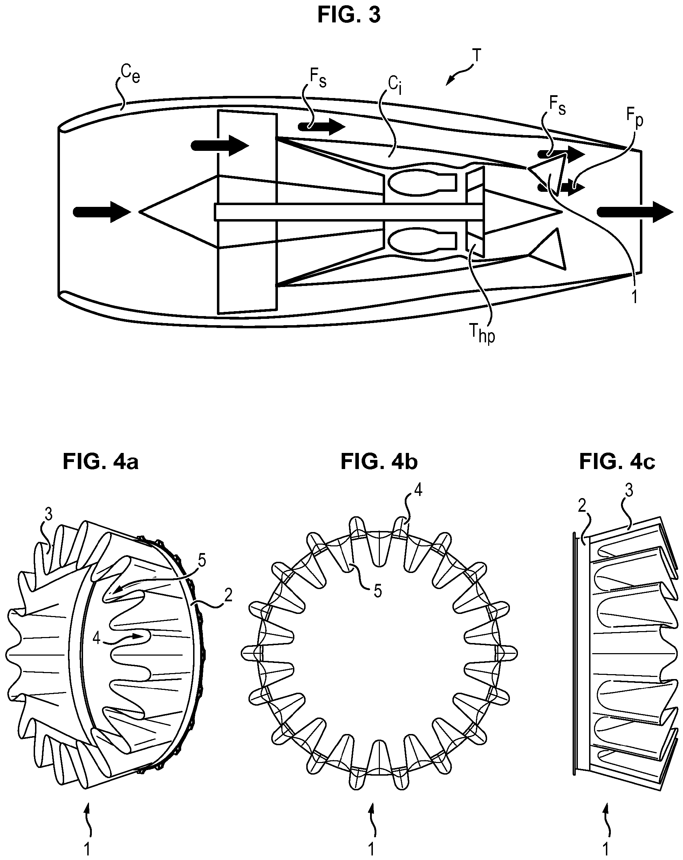

En référence à la figure 3, un turboréacteur T à double flux, dont le fonctionnement général considéré comme connu ne sera pas explicité, présente classiquement d'amont vers l'aval une soufflante propulsant un flux d'air qui sera divisé en flux primaire Fp et un flux secondaire Fs.

Le flux primaire s'écoule dans un compresseur basse pression, un compresseur haute pression, une chambre de combustion, une turbine haute pression Thp et rejoint le flux secondaire Fs en aval d'un mélangeur 1.

Le flux secondaire Fs s'écoule lui de façon concentrique au flux primaire Fp autour du carter intérieur Ci et à l'intérieur du carter extérieur Ce.

La fonction du mélangeur 1 est d'optimiser le mélange des flux primaire Fp et secondaire Fs en sortie du turboréacteur T.

Le mélange des flux primaires Fp et secondaires Fs en aval du turboréacteur T apportant de nombreux avantages tant au niveau des performances que des perturbations environnementales, de nouvelles solutions sont explorées continuellement pour optimiser l'homogénéité du mélange.

### Mélangeur de flux

En référence aux figures 4a, 4b et 4c, un mélangeur à lobes 1 de type marguerite présente une partie amont 2 nominalement cylindrique et une partie aval 3 ondulée.

Les indications relatives aux directions radiales, axiales et tangentielles correspondent à l'axe du mélangeur, qui est également celui du turboréacteur. Les notions d'amont et d'aval suivent le sens d'écoulement des gaz dans le turboréacteur.

Les ondulations de la partie avale forment ensemble une pluralité de lobes radialement externes 4 et internes 5 répartis de façon circonférentielle autour de l'axe longitudinal du mélangeur 1.

Le mélangeur a la particularité de ce qu'au moins un de ses lobes présente en au moins une zone un ajout ou un retrait de matière configuré pour modifier la réponse vibratoire dudit mélangeur.

Cet ajout ou retrait est choisi pour déplacer les fréquences de ses modes propres afin d'éviter une coïncidence avec les fréquences de vibrations générées par un régime de fonctionnement stabilisé du turboréacteur.

Notamment, pour diminuer la réponse vibratoire, comme illustré ultérieurement, les modifications apportées au mélangeur 1 visent à favoriser l'apparition de modes complexes, composés d'une somme de modes purs.

### Formes de réalisation du mélangeur

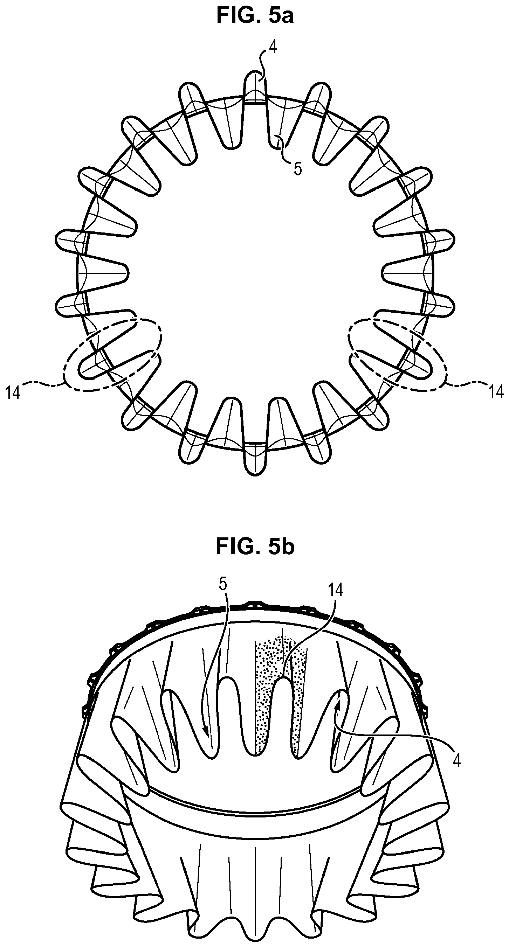

En référence à la figure 5a, une solution retenue comporte deux lobes présentant une épaisseur modifiée 14. En effet, dans un souci de minimisation de l'augmentation de la masse, le meilleur compromis entre augmentation de masse et modification de la réponse vibratoire est recherché.

Un lobe modifié 14 est donc un lobe extérieur 44 qui présente une portion de surface plus épaisse, cette portion s'étendant entre les sommets des deux lobes internes 5 qui le bordent comme observable sur la figure 5b.

Les deux lobes 14 susmentionnés présentent une épaisseur de paroi différente des autres lobes 13. Dans une solution retenue, le mélangeur 1 comporte 16 lobes 13 réguliers d'une épaisseur de paroi de 1mm et 2 lobes particuliers 14 présentant une épaisseur de paroi de 1,5mm.

Le taux d'épaississement de la paroi retenu tient également compte de contraintes de fabrication, afin d'assurer que sur un produit fini un lobe épais 14 présentant une épaisseur minimale dans sa zone de tolérance soit sensiblement différent d'un lobe régulier 13 présentant une épaisseur maximale dans sa zone de tolérance afin d'assurer un gain en performances sensiblement constant pour tous les mélangeurs 1.

L'épaisseur d'un lobe modifié 14 peut représenter 110% à 300% de l'épaisseur d'un lobe régulier.

Un lobe modifié 14 peut par exemple présenter une épaisseur représentant 150% de l'épaisseur d'un lobe régulier 13.

Une différence marquée permet une différenciation visuelle évidente lors de la fabrication, le mélangeur 1 étant fabriqué par assemblage de demi-lobes juxtaposés et soudés entre eux.

Lors de l'assemblage, deux types de pièces différents permettent de réaliser le mélangeur 1 :
- Un premier type étant un lobe régulier 13 comportant un lobe extérieur encadré de deux demi-lobes intérieurs, ce type de pièce composant en grande majorité le mélangeur ;
- Un second type étant un lobe modifié 14 présentant la même géométrie générale qu'un lobe régulier à l'exception de l'épaisseur de sa paroi, et dans le cas de la solution représentée en figure 5a deux lobes complets modifiés sont compris dans le mélangeur 1.

Les pièces sont juxtaposées et soudées pour former les lobes du mélangeur.

Le profil de contact entre un lobe modifié 14 et un lobe classique 13 n'est pas lissé, et comporte donc une « marche » au niveau du contact, liée à la différence d'épaisseur entre un lobe modifié et un lobe régulier.

Un autre procédé de fabrication d'un mélangeur est décrit dans le document FR2912469.

Dans d'autres formes de réalisation de l'invention, il est également envisagé de diminuer l'épaisseur d'un lobe pour générer les mêmes effets, un lobe modifié 14 présentant dans ce mode de réalisation une épaisseur pouvant représenter 25% à 90% de l'épaisseur d'un lobe régulier.

Un lobe modifié 14 peut par exemple présenter une épaisseur représentant 50% de l'épaisseur d'un lobe régulier 13.

Une modification ponctuelle de l'épaisseur d'un ou plusieurs lobes est également une possibilité, comme un ajout de matière ou une surépaisseur locale, de même qu'un enlèvement de matière comme un perçage ou une rainure réalisée sur un ou plusieurs lobes.

La position relative des lobes modifiés 14 influe aussi sur la réponse vibratoire du mélangeur 1. En effet, la périodicité angulaire (périodicité en suivant une rotation autour de l'axe du mélangeur) du motif formé par la position des lobes modifiés 14 favorise l'apparition de modes propres. Une des solutions envisagées est donc, dans le cas d'un épaississement de plusieurs lobes, de les disposer de manière à éviter de créer un motif formant une répétition angulaire.

En référence à la figure 5b, la zone épaissie d'un lobe modifié 14 concerne donc un lobe extérieur 4.

La configuration adoptée permet donc de favoriser l'apparition de modes vibratoires complexes, moins dommageables pour le mélangeur 1, en plus de réduire drastiquement le nombre de modes à diamètres considérés purs.

### Mode vibratoire recherché

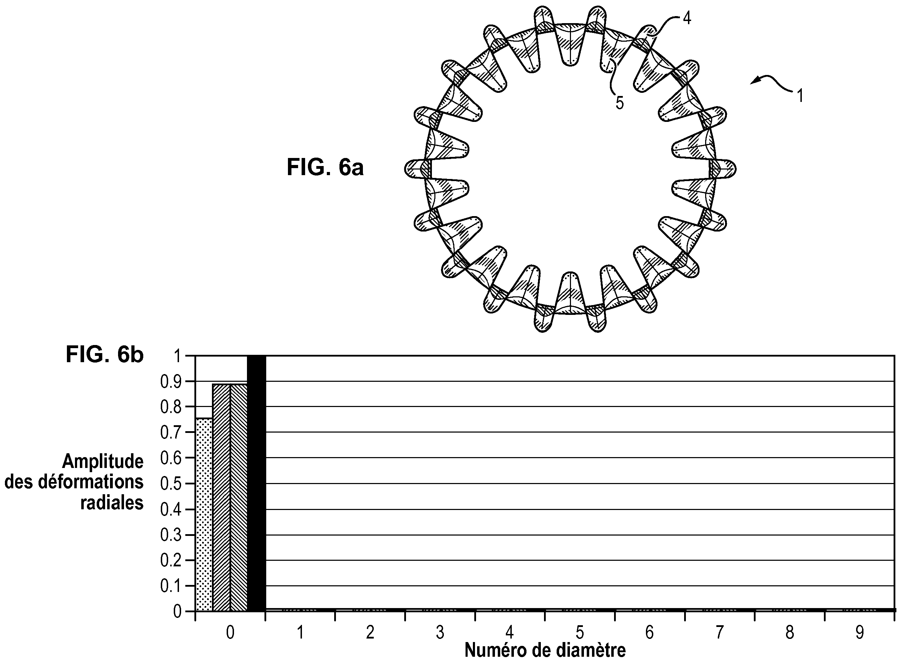

En référence à la figure 6b, on peut observer la cartographie des déformations sur un mode de déformation pur, ici un mode 0Φ. La déformée est globalement uniforme pour un rayon donné, la déformation la plus importante étant atteinte au diamètre le plus faible de la pièce, au niveau de la crête des lobes internes 5.

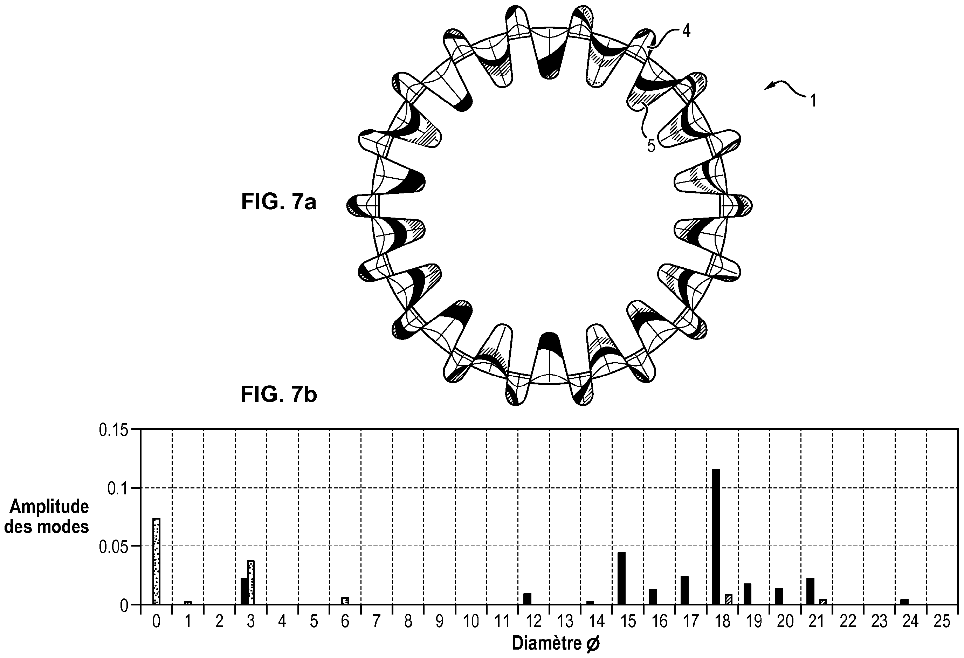

En référence à la figure 7b, on peut constater que le mode critique représenté est constitué d'une somme de modes à déformation radiale aux diamètres Φ3, Φ12, Φ14, Φ15, Φ16, Φ17, Φ18, Φ19, Φ20 et Φ21, de modes à déformation tangentielle aux diamètres Φ0, Φ3 et Φ6, et de modes à déformation axiale aux diamètres Φ18 et Φ21. La répartition des déformations est moins uniforme, en plus de présenter une amplitude moins importante.

## Revendications

1. Mélangeur de flux gazeux (1) concentriques pour une turbomachine à flux multiples, comportant une partie amont (11) nominalement cylindrique et une partie aval (12) présentant des lobes extérieurs (4) et intérieurs (5) répartis de façon circonférentielle sur le tour dudit mélangeur (1), **caractérisé en ce qu'**il comporte au moins un lobe modifié (14) disposé selon un motif angulaire apériodique et présentant en au moins une zone une épaisseur de paroi différente des autres lobes, de manière à modifier la réponse vibratoire dudit mélangeur (1).

2. Mélangeur (1) tel que défini dans la revendication précédente, **caractérisé en ce qu'**au moins un des lobes modifiés (14) présente une épaisseur de paroi qui varie entre 110% et 300% de l'épaisseur de paroi des lobes (13) réguliers.

3. Mélangeur (1) tel que défini dans l'une des revendications précédentes, **caractérisé en ce qu'**au moins un des lobes modifiés (14) présente une épaisseur de 1,5mm.

4. Mélangeur (1) tel que défini dans l'une des revendications précédentes, **caractérisé en ce qu'**au moins un des lobes modifiés (14) présente une épaisseur de paroi qui varie entre 50% et 90% de l'épaisseur de paroi des lobes (13) réguliers.

5. Mélangeur tel que défini dans l'une des revendications précédentes, **caractérisé en ce qu'**il comporte au moins deux lobes modifiés (14).

6. Mélangeur selon l'une des revendications précédentes, **caractérisé en ce qu'**un ajout ou un retrait de matière s'étend sur l'ensemble d'une zone comportant un demi lobe intérieur (5), un lobe extérieur (4) et un demi lobe intérieur (5).

7. Mélangeur selon l'une des revendications précédentes, dans lequel deux lobes (14) disposés selon un motif angulaire apériodique présentent une épaisseur de paroi différente.

8. Turbomachine comportant un mélangeur (1) tel que défini dans les revendications précédentes.

## Patentansprüche

1. Mischer (1) konzentrischer Gasströmungen für eine Turbomaschine mit mehreren Strömungen, der einen nominell zylindrischen stromaufwärtigen Teil (11) und einen stromabwärtigen Teil (12) beinhaltet, der äußere (4) und innere (5) Keulen aufweist, die umfänglich über die Umdrehung des Mischers (1) verteilt sind, **dadurch gekennzeichnet, dass** er mindestens eine modifizierte Keule (14) beinhaltet, die gemäß einem aperiodischen Winkelmotiv angeordnet ist, und mindestens eine Zone mit einer sich von den anderen Keulen unterscheidenden Wanddicke aufweist, um die Schwingungsreaktion des Mischers (1) zu verändern.

2. Mischer (1) nach dem vorstehenden Anspruch, **dadurch gekennzeichnet, dass** mindestens eine der modifizierten Keulen (14) eine Wanddicke aufweist, die zwischen 110 % und 300 % der Wanddicke der regulären Keulen (13) variiert.

3. Mischer (1) nach einem der vorstehenden Ansprüche, **dadurch gekennzeichnet, dass** mindestens eine der modifizierten Keulen (14) eine Dicke von 1,5 mm aufweist.

4. Mischer (1) nach einem der vorstehenden Ansprüche, **dadurch gekennzeichnet, dass** mindestens eine der modifizierten Keulen (14) eine Wanddicke aufweist, die zwischen 50 % und 90 % der Wanddicke der regulären Keulen (13) aufweist.

5. Mischer nach einem der vorstehenden Ansprüche, **dadurch gekennzeichnet, dass** er mindestens zwei modifizierte Keulen (14) beinhaltet.

6. Mischer nach einem der vorstehenden Ansprüche, **dadurch gekennzeichnet, dass** sich ein Hinzufügen oder Entfernen von Material über die Gesamtheit einer Zone erstreckt, die eine halbe innere (5) Keule, eine äußere (4) Keule und eine halbe innere (5) Keule beinhaltet.

7. Mischer nach einem der vorstehenden Ansprüche, wobei zwei Keulen (14), die gemäß einem aperiodischen Winkelmotiv angeordnet sind, eine unterschiedliche Wanddicke aufweisen.

8. Turbomaschine, die einen Mischer (1) nach den vorstehenden Ansprüchen beinhaltet.

## Claims

1. Mixer for concentric gas flows (1) for a multiflow turbomachine, including a nominally cylindrical upstream portion (11) and a downstream portion (12) having outer (4) and inner lobes (5) distributed circumferentially over the perimeter of said mixer (1), **characterised in that** it includes a least one modified lobe (14) disposed according to an aperiodic angular pattern and having at least in one area a wall thickness different from the other lobes, so as to modify the vibratory response of said mixer (1).

2. Mixer (1) as defined in the preceding claim, **characterised in that** at least one of the modified lobes (14) has a wall thickness that varies between 110% and 300% of the wall thickness of the regular lobes (13).

3. Mixer (1) as defined in one of the preceding claims, **characterised in that** at least one of the modified lobes (14) has a thickness of 1.5 mm.

4. Mixer (1) as defined in one of the preceding claims, **characterised in that** at least one of the modified lobes (14) has a wall thickness that varies between 50% and 90% of the wall thickness of the regular lobes (13).

5. Mixer as defined in one of the preceding claims, **characterised in that** it includes at least two modified lobes (14).

6. Mixer according to one of the preceding claims, **characterised in that** an addition or a removal of material extends over the entire area including an inner half-lobe (5), an outer lobe (4) and an inner half-lobe (5) .

7. Mixer according to one of the preceding claims, wherein two lobes (14) disposed according to an aperiodic angular pattern have a different wall thickness.

8. Turbomachine including a mixer (1) as defined in the preceding claims.
